# EUROPÄISCHE PATENTSCHRIFT

(11) **EP 2 597 322 B1**
(45) Veröffentlichungstag und Bekanntmachung des Hinweises auf die Patenterteilung: **27.07.2016**
(21) Anmeldenummer: 12007920.7
(22) Anmeldetag: 23.11.2012
(51) Int. Cl.: F16B 33/00, F16B 33/06, F16B 39/22

(54) **Gewindesicherung**
Thread fixing
Fixation de filetage

(30) Priorität: 23.11.2011 DE 102011119140
(43) Veröffentlichungstag der Anmeldung: 29.05.2013
(73) Patentinhaber: GESI Gewindesicherungs-GmbH, 73207 Plochingen (DE)
(72) Erfinder: Baumann, Waldemar, 73734 Esslingen (DE)
(74) Vertreter: Schöneborn, Holger

(56) Entgegenhaltungen:
- EP-A1- 0 077 659
- US-A- 4 325 985
- US-A1- 2007 021 533

## Beschreibung

Die Erfindung betrifft ein Gewindeteil, insbesondere eine Schraube, Mutter oder einen Gewindestift, welches ein Gewinde aufweist, das teilweise mit einem Überzug versehen ist, in dem sich Mikrokapseln befinden, wobei zumindest ein Teil der Mikrokapseln einen polymerisierbaren Klebstoff enthält. Darüber hinaus betrifft die Erfindung ein Verfahren zur Herstellung eines entsprechenden Gewindeteils.

Um das ungewollte Lösen oder Lockern einer Schraubverbindung zu verhindern, sind aus dem Stand der Technik unterschiedliche Maßnahmen bekannt. Das Lösen von Schraubverbindungen ist insbesondere eine Folge von Relativbewegungen zwischen den miteinander verbundenen Komponenten, beispielsweise in Form von Vibrationen. Auch Temperaturschwankungen und Korrosion können zur Lockerung einer Schraubverbindung führen. Neben mechanischen Schraubensicherungen wie dem Einsatz eines Splints, einer selbsthemmenden Mutter oder der Verwendung von Zahnscheiben sind auch Schraubensicherungen durch Einsatz einer Beschichtung auf dem Gewinde bekannt. Dabei wird unterschieden zwischen klebenden und klemmenden Gewindesicherungen.

Bei einer Klebesicherung, die als Losdrehsicherung wirkt, wird das selbsttätige Losdrehen der Gewindeverbindung durch Verkleben von Bolzengewinde und Muttergewinde ausgeschlossen, hierbei bleibt die eingesetzte Vorspannkraft weitgehend erhalten. Eine Klebesicherung wird typischerweise dadurch erreicht, dass Mikrokapseln, die einerseits einen zu polymerisierenden Klebstoff, andererseits einen Härter enthalten, auf das Bolzen- und/oder Muttergewinde aufgebracht werden. Beim Verschrauben der Gewinde miteinander werden die Mikrokapseln zerstört und ihr Inhalt freigesetzt und durchmischt. Die chemische Reaktion (Polymerisation) zwischen Klebstoff und Härter bewirkt die gewünschte Sicherungswirkung. Mit Hilfe einer Klebesicherung kann eine Gewindesicherung herbeigeführt werden, die den Anforderungen von DIN 267, Teil 27 entspricht.

Ein Vorteil einer Klebesicherung ist die hohe Sicherungswirkung, auch bei hoher dynamischer Querbeanspruchung. Darüber hinaus wird eine gute Abdichtung auch bei Vorliegen hoher Drücke erreicht. Auf der anderen Seite bietet eine Klebesicherung, wenn das Gewinde einmal gelöst wurde, praktisch keine weitere Sicherung mehr. Darüber hinaus muss bei der Verarbeitung beachtet werden, dass es sich um ein relativ schnell härtendes System handelt, d. h. nach Einschrauben des Bolzengewindes in die zugehörige Mutter und der damit verbundenen Zerstörung der Mikrokapseln verbleiben nur einige Minuten, um das gewünschte Anziehdrehmoment zur Erzielung der Vorspannkraft aufzubringen. Auch Justiervorgänge sollten innerhalb dieser relativ kurzen Zeitspanne abgeschlossen sein, da sonst mit einer Zerstörung des Polymerisationsgefüges gerechnet werden muss. Die vollständige Aushärtung ist hingegen meist erst nach ca. 24 Stunden erreicht.

Daneben sind auch sog. Klemmsicherungen nach DIN 267, Teil 28 bekannt. Diese wirken jedoch im Gegensatz zu einer Klebesicherung nicht als Losdreh-, sondern als Verliersicherung, d. h. sie können ein teilweises Losdrehen nicht verhindern, wohl aber ein vollständiges Auseinanderfallen der Schraubverbindung. Durch die Aufbringung einer eine Klemmwirkung zwischen den Gewinden herbeiführenden Beschichtung wird dem selbsttätigen Lösen der Schraubverbindung entgegengewirkt. Die klemmende Wirkung basiert auf einem Reibschluss zwischen Bolzengewinde und Muttergewinde. Ein Vorteil einer Klemmsicherung ist darin zu sehen, dass auch nach partiellem Lösen der Sicherung eine weitere Sicherung gegeben ist. Darüber hinaus wird auch mit einer Klemmsicherung eine gute Abdichtung erzeugt. Eine Zeitbeschränkung beim Aufbringen des gewünschten Anziehdrehmomentes oder bei Justiervorgängen besteht nicht. Auf der anderen Seite stellt eine Klemmsicherung keine Losdrehsicherung dar, die jegliche Lockerung der Schraubverbindung wirkungsvoll verhindert.

Aus der US 4,325,985 ist eine Gewindesicherung bekannt, bei der ein polymerisierbares Harzmaterial in flüssiger oder mikroverkapselter Form aufgebracht und von einer filmbildenden Schicht bedeckt wird, die durch Einwirkung von Strahlung aushärtet. Auf diese Weise können lange Trocknungszeiten vermieden werden.

Die US 2007/0021533 A1 zeigt einen Klebstoff, wobei ein Monomer und ein erster Teil des Härters mikroverkapselt sind. Der zweite Teil des Härters kann ebenfalls mikroverkapselt sein. Das System kann u. a. auch für Gewinde eingesetzt werden.

Die EP 0 077 659 A1 beschreibt eine polymerisierbare Flüssigkeit zur Sicherung ineinandergreifender Teile, beispielsweise Gewinde. Hierzu wird eine Beschichtung aufgebracht, die durch Einwirkung von Strahlung, insbesondere UV-Strahlung, zum Aushärten gebracht werden kann. Durch Zugabe eines Trübungsmittels wird erreicht, dass die Aushärtung nur an der Oberfläche erfolgt, während unter der Oberfläche liegende Schichten erst bei mechanischer Einwirkung, insbesondere Verschraubung polymerisieren.

Keines der genannten Dokumente beschreibt aber eine Gewindesicherung, die sowohl die Anforderungen an eine Losdrehsicherung nach DIN 267, Teil 27 als auch die an eine Klemmsicherung nach DIN 267, Teil 28 erfüllt.

Ausgehend vom vorbeschriebenen Stand der Technik stellt sich die Aufgabe, eine Gewindesicherung zur Verfügung zu stellen, die einerseits eine Losdrehsicherung, d. h. eine Sicherung auch gegen geringfügiges Lockern darstellt, anderseits jedoch auch dann noch eine hinreichende Sicherung bewirkt, wenn eine Lockerung des Gewindes stattgefunden hat, so dass ein vollständiges Auseinanderfallen der Verbindung weiterhin vermieden wird.

Diese Aufgabe wird erfindungsgemäß gelöst durch ein Gewindeteil, insbesondere eine Schraube, eine Mutter oder einen Gewindestift, welches ein Gewinde aufweist, das zumindest teilweise mit einem Überzug versehen ist, der Mikrokapseln enthält, wobei zumindest ein Teil der Mikrokapseln einen polymerisierbaren Klebstoff enthält und wobei das Gewinde des Weiteren zumindest teilweise mit einer nicht-reaktiven, eine Klemmwirkung erzeugenden Beschichtung versehen ist, die beim Verschrauben mit einem Gegengewinde einen Reibschluss zwischen Gewinde und Gegengewinde herbeiführt, wobei die eine Klemmwirkung erzeugende Beschichtung ein Polyamid enthält.

Durch ein erfindungsgemäß beschaffenes Gewindeteil kann beim Verschrauben des Gewindeteiles mit einem entsprechenden Gegengewinde eine Gewindesicherung erzeugt werden, die die Vorteile einer Klebesicherung mit den Vorteilen einer Klemmsicherung verbindet. Beim Verschrauben des Gewindeteiles mit einem Gegengewinde werden die Mikrokapseln zerstört und der darin enthaltene Klebstoff freigesetzt. In den meisten Fällen enthält ein weiterer Teil der Mikrokapseln einen Härter, dieser wird somit ebenfalls beim Verschrauben freigesetzt. Denkbar ist jedoch auch, den Härter in ein Trägermaterial zu integrieren, in das die Mikrokapseln eingebettet sind. Es erfolgt eine Polymerisationsreaktion, die für eine festhaftende Verklebung der Gewinde sorgt. Eine Lockerung der Schraubverbindung ist somit auch bei starken Vibrationen oder Temperaturschwankungen nahezu ausgeschlossen. Auf der anderen Seite wird dadurch, dass das Gewinde darüber hinaus eine nicht-reaktive Beschichtung aufweist, die beim Verschrauben mit einem Gegengewinde einen Reibschluss zwischen Gewinde und Gegengewinde herbeiführt, erreicht, dass selbst nach einem partiellen Lösen der Schraubverbindung noch eine ausreichende Verliersicherung sichergestellt ist, die eine vollständige Lösung der Schraubverbindung verhindert. Dies ist u. a. deshalb von besonderer Bedeutung, weil mit einer Klebesicherung versehene Gewindeteile häufig von nicht sachkundigen Nutzern gelöst und anschließend wieder festgezogen werden, was mit einem nahezu vollständigen Verlust der Sicherungswirkung verbunden ist. In einem solchen Fall wird bei Verwendung des erfindungsgemäßen Gewindeteils zwar nach einmaliger Lösung der Schraubverbindung keine vollständige Losdrehsicherung mehr erreicht, wohl aber eine für viele Einsatzzwecke immer noch ausreichende Verliersicherung.

Bei der eine Klemmwirkung erzeugenden Beschichtung handelt es sich um eine Polyamidbeschichtung. Typischerweise handelt es sich um ein Polyamidpulver, das auf das Gewinde aufgeschmolzen wird, wobei eine Temperatur im Bereich von 200 - 230°C zum Einsatz kommt. Möglich ist jedoch auch die Verwendung einer filmbildenden Polyamidsuspension, die auf das Gewinde aufgebracht wird.

Für die Erzeugung der Klebewirkung kann insbesondere ein ungesättigtes (Meth)acrylat als Klebstoff zum Einsatz kommen. Als Härter wird in diesem Fall ein Radikalbildner, insbesondere ein Peroxid verwendet, welcher die radikalische Polymerisation des (Meth)acrylates in Gang setzt. Soweit im Rahmen dieser Erfindung von Acryl bzw. Acrylat die Rede ist, wird hierunter auch stets Methacryl bzw. Methacrylat verstanden.

Eine weitere Möglichkeit, eine ausreichende Klebebeschichtung zu erzeugen, besteht in der Verwendung von mit einem Epoxidharz gefüllten Kapseln. In diesem Fall wird als Härter typischerweise ein Amin verwendet. Zusätzlich können bei Bedarf noch weitere Komponenten zugesetzt werden, beispielsweise ein Beschleuniger der Polymerationsreaktion. Als Epoxidkomponenten kommen Epoxidverbindungen und Polyepoxide, beispielsweise aromatische, aliphatische und cycloaliphatische Epoxidharze, Glycidylester und Glycidylether in Betracht. Ein Beispiel sind Diglycidylpolyether des Bisphenols A. Typische Härter sind aliphatische und cycloaliphatische Amine und Polyamine, Addukte von Polyaminen und Epoxidharzen, Phenol-Amin-Kombinationen oder Kondensationsprodukte aus Polyaminen und dimerisierten Fettsäuren.

Eine weitere Klasse von Klebstoffsystemen, die in mikroverkapselter Form zum Einsatz kommen können, sind Polyestersysteme. Typischerweise handelt es sich um ungesättigte Polyester. Neben den bereits oben erwähnten (Meth)acrylsäureestern kann es sich auch um Polyester handeln, die sich von Maleinsäure, Fumarsäure oder Itaconsäure ableiten. Beim Härter handelt es sich häufig um Peroxide. Ebenso möglich ist der Einsatz von Peroxysäuren oder Hydroperoxiden.

Die den polymerisierbaren Klebstoff und/oder den Härter enthaltenden Mikrokapseln können innerhalb eines lackartigen Trägermaterials vorliegen. Mikrokapseln sind aus dem Stand der Technik bekannt, bspw. aus der WO 95/33554 A1

Die Beschichtung des Gewindes kann unterschiedlich ausgestaltet sein. Es ist beispielsweise möglich, eine Rundumbeschichtung vorzusehen, ebenso möglich ist jedoch auch eine nur bereichsweise Beschichtung des Gewindes, beispielsweise in Form eines runden oder ovalen Flecks.

Neben dem erfindungsgemäßen Gewindeteil betrifft die Erfindung auch ein Verfahren zur Herstellung eines erfindungsgemäßen Gewindeteils. Eine Möglichkeit besteht darin, die Klebstoff bzw. Härter enthaltenden Mikrokapseln mit einem nicht-reaktiven, ein Klemmwirkung erzeugenden Beschichtungsmittel zu mischen und auf das Gewinde aufzuschmelzen. In diesem Fall liegt das Beschichtungsmittel als Feststoff, insbesondere als Pulver vor. Besonders geeignet ist die Verwendung eines Polyamidpulvers.

Alternativ kann zunächst das als Feststoff vorliegende, eine Klemmwirkung herbeiführende Beschichtungsmittel auf das Gewinde aufgeschmolzen werden. Anschließend werden in das aufgeschmolzene Beschichtungsmittel, das noch nicht vollständig abgekühlt und daher relativ weich ist, die Mikrokapseln aufgebracht, insbesondere aufgesprüht, wobei die Mikrokapseln wiederum den polymerisierbaren Klebstoff bzw. den Härter enthalten.

Gemäß einer weiteren Ausführungsform der Erfindung wird das Beschichtungsmittel auf das Gewinde aufgeschmolzen. Darüber hinaus wird ein aushärtbares Trägermaterial zur Verfügung gestellt, das die Mikrokapseln enthält. Das flüssige Trägermaterial samt Mikrokapseln wird sodann auf das Gewinde aufgesprüht. Das Trägermaterial wird schließlich ausgehärtet.

Gemäß einer weiteren Ausführungsform wird das die Klemmwirkung erzeugende Beschichtungsmittel auf das Gewinde aufgeschmolzen. Darüber hinaus wird das aushärtbare Trägermaterial auf das Gewinde aufgebracht. Erst danach werden die den Klebstoff bzw. Härter enthaltenden Mikrokapseln in das noch feuchte Trägermaterial eingebracht, bevor schließlich die Aushärtung des Trägermaterials erfolgt.

Als Trägermaterial gemäß den zuletzt genannten Verfahren zur Herstellung des Gewindeteils bietet sich insbesondere ein UV-Lack an, d. h. ein Lack, der durch Einwirkung von UV-Strahlung aushärtet. Sie zeichnen sich dadurch aus, dass sie im Gegensatz zu Öl- oder Dispersionslacken keine flüchtigen Bestandteile aufweisen, d. h. sie enthalten weder Wasser noch andere Lösungsmittel. Typischerweise enthält ein UV-Lack reaktive (Meth)acrylate, d. h. ungesättigte Polymere der (Meth)acrylsäure oder von (Meth)acrylsäurederivaten, insbesondere Estern, sowie Fotoinitiatoren. Des Weiteren können Hilfsstoffe, beispielsweise Additive und Reaktivverdünner vorhanden sein. Bei Bestrahlung mit UV-Licht zerfallen die Fotoinitiatoren unter Bildung von Radikalen und aktivieren den Polymerisationsprozess der (Meth)acrylate. Die Aushärtung der Lackschicht erfolgt innerhalb weniger Sekunden. Beispiele für Fotoinitiatoren sind Benzophenon, 4-Methylbenzophenon und 2-Hydroxy-2-methylpropiophenon. Ein Beispiel für ein polymerisierbares Acrylat ist Tetrahydrofurfurylacrylat oder 1,6-Hexandioldiacrylat

Im Stand der Technik wurde als Trägermaterial für Mikrokapseln bisher meist ein Harzgebinde verwendet, das nur relativ langsam und mit hohem Energieaufwand durch Applizieren von Warmluft aushärtet. In Vergleich hierzu ist die Verwendung von UV-Lack besonders vorteilhaft, da die Aushärtung sehr schnell erfolgt und der benötigte Energieaufwand aufgrund des Verzichts auf Warmluft deutlich niedriger ist. Die besonders rasche Trocknung ist auch insofern vorteilhaft, als ein höherer Durchsatz möglich ist, d.h. die Fertigungsstückzahlen werden bei ansonsten identischem Prozess deutlich erhöht.

Wie bereits erwähnt, wird als nicht-reaktives, eine Klemmwirkung erzeugendes Beschichtungsmittel ein Polyamid eingesetzt, insbesondere in Form eine Polyamidpulvers. Möglich ist jedoch auch die Aufbringung des Beschichtungsmittels in Form einer Dispersion, die anschließend auf dem Gewinde trocknet.

## Patentansprüche

1. Gewindeteil insbesondere Schraube, Mutter oder Gewindestift, welches ein Gewinde aufweist, das zumindest teilweise mit einem Überzug versehen ist, in dem sich Mikrokapseln befinden, wobei zumindest ein Teil der Mikrokapseln einen polymerisierbaren Klebstoff enthält,
**dadurch gekennzeichnet, dass** das Gewinde darüber hinaus zumindest teilweise mit einer nicht-reaktiven, eine Klemmwirkung erzeugenden Beschichtung versehen ist, die beim Verschrauben mit einem Gegengewinde einen Reibschluss zwischen Gewinde und Gegengewinde herbeiführt, wobei die eine Klemmwirkung erzeugende Beschichtung ein Polyamid enthält.

2. Gewindeteil nach Anspruch 1, **dadurch gekennzeichnet, dass** ein weiterer Teil der Mikrokapseln einen Härter enthält.

3. Gewindeteil nach Anspruch 1 oder 2, **dadurch gekennzeichnet, dass** die im Überzug vorhandenen Mikrokapseln als Klebstoff ungesättigtes (Meth)acrylat enthalten.

4. Gewindeteil nach Anspruch 1 oder 2, **dadurch gekennzeichnet, dass** die im Überzug vorhandenen Mikrokapseln als Klebstoff ein Epoxidharz enthalten.

5. Verfahren zur Herstellung eines Gewindeteils nach einem der Ansprüche 2 bis 4, **dadurch gekennzeichnet, dass** die Klebstoff enthaltenden Mikrokapseln und die Härter enthaltenden Mikrokapseln mit einem nicht-reaktiven, eine Klemmwirkung erzeugenden Beschichtungsmittel gemischt und auf das Gewinde aufgeschmolzen werden, wobei das Beschichtungsmittel ein Polyamid ist.

6. Verfahren zur Herstellung eines Gewindeteils nach einem der Ansprüche 2 bis 4, **dadurch gekennzeichnet, dass** zunächst ein nicht-reaktives, eine Klemmwirkung erzeugendes Beschichtungsmittel auf das Gewinde aufgeschmolzen wird und auf das Beschichtungsmittel im weichen, noch nicht vollständig abgekühlten Zustand die Klebstoff enthaltenden Mikrokapseln und die Härter enthaltenden Mikrokapseln aufgesprüht werden, wobei das Beschichtungsmittel ein Polyamid ist.

7. Verfahren zur Herstellung eines Gewindeteils nach einem der Ansprüche 2 bis 4, **dadurch gekennzeichnet, dass** zunächst ein nicht-reaktives, eine Klemmwirkung erzeugendes Beschichtungsmittel auf das Gewinde aufgeschmolzen wird und danach ein Mikrokapseln enthaltendes, aushärtbares Trägermaterial auf das Gewinde aufgesprüht und ausgehärtet wird, wobei die Mikrokapseln zum Teil Klebstoff und zum Teil Härter enthalten und wobei das Beschichtungsmittel ein Polyamid ist.

8. Verfahren zur Herstellung eines Gewindeteils nach einem der Ansprüche 2 bis 4, **dadurch gekennzeichnet, dass** ein nicht-reaktives, eine Klemmwirkung erzeugendes Beschichtungsmittel auf das Gewinde aufgeschmolzen und ein aushärtbares Trägermaterial auf das Gewinde aufgebracht werden, danach die Klebstoff enthaltenden Mikrokapseln und die Härter enthaltenden Mikrokapseln in das noch feuchte Trägermaterial eingebracht werden und das Trägermaterial ausgehärtet wird, wobei das Beschichtungsmittel ein Polyamid ist.

9. Verfahren nach Anspruch 7 oder 8, **dadurch gekennzeichnet, dass** das Trägermaterial ein UV-Lack ist.

10. Verfahren nach Anspruch 9, **dadurch gekennzeichnet, dass** der UV-Lack ungesättigte Polymere der (Meth)acrylsäure oder von Derivaten der (Meth)acrylsäure, insbesondere (Meth)acrylsäureester, sowie Fotoinitiatoren enthält.

## Claims

1. Threaded part, more particularly screw, bolt or set screw, which has a thread which is provided at least partly with a covering in which there are microcapsules, at least part of the microcapsules comprising a polymerizable adhesive,
**characterized**
**in that** the thread is further provided at least partly with a non-reactive coating which generates a clamping effect, the coating, when screwed together with a mating thread, producing a frictional engagement between thread and mating thread, and the coating which generates a clamping effect comprising a polyamide.

2. Threaded part according to Claim 1, **characterized in that** a further part of the microcapsules comprises a curing agent.

3. Threaded part according to Claim 1 or 2, **characterized in that** the microcapsules present in the covering comprise unsaturated (meth)acrylate as adhesive.

4. Threaded part according to Claim 1 or 2, **characterized in that** the microcapsules present in the covering comprise an epoxy resin as adhesive.

5. Method for producing a threaded part according to any of Claims 2 to 4, **characterized in that** the microcapsules comprising adhesive and the microcapsules comprising curing agent are mixed with a non-reactive coating agent which generates a clamping effect and are applied to the thread by melting, the coating agent being a polyamide.

6. Method for producing a threaded part according to any of Claims 2 to 4, **characterized in that** first of all a non-reactive coating agent which generates a clamping effect is applied to the thread by melting, and the microcapsules comprising adhesive and the microcapsules comprising curing agent are sprayed onto the coating agent in the soft, as yet not fully cooled state, the coating agent being a polyamide.

7. Method for producing a threaded part according to any of Claims 2 to 4, **characterized in that** first of all a non-reactive coating agent which generates a clamping effect is applied to the thread by melting and thereafter a fully curable carrier material comprising microcapsules is sprayed onto the thread and fully cured, the microcapsules in part comprising adhesive and in part comprising curing agent, and the coating agent being a polyamide.

8. Method for producing a threaded part according to any of Claims 2 to 4, **characterized in that** a non-reactive coating agent which generates a clamping effect is applied to the thread by melting, and a fully curable carrier material is applied to the thread, after which the microcapsules comprising adhesive and the microcapsules comprising curing agent are incorporated into the still-wet carrier material, and the carrier material is fully cured,

9. Method according to Claim 7 or 8, **characterized in that** the carrier material is a UV varnish.

10. Method according to Claim 9, **characterized in that** the UV varnish comprises unsaturated polymers of (meth)acrylic acid or of derivatives of (meth)acrylic acid, more particularly (meth)acrylic esters and also photoinitiators.

## Revendications

1. Partie de filetage, notamment vis, écrou ou tige filetée qui comprend un filetage, qui est au moins partiellement munie d'un revêtement dans lequel se trouvent des microcapsules, au moins une partie des microcapsules contenant un adhésif polymérisable, **caractérisée en ce que** le filetage est en outre au moins partiellement muni d'un revêtement non réactif, générant un effet de serrage, qui entraîne lors du vissage avec un contre-filetage une liaison par frottement entre le filetage et le contre-filetage, le revêtement générant un effet de serrage contenant un polyamide.

2. Partie de filetage selon la revendication 1, **caractérisée en ce qu'**une autre partie des microcapsules contient un agent de durcissement.

3. Partie de filetage selon la revendication 1 ou 2, **caractérisée en ce que** les microcapsules présentes dans le revêtement contiennent un (méth)acrylate insaturé en tant qu'adhésif.

4. Partie de filetage selon la revendication 1 ou 2, **caractérisée en ce que** les microcapsules présentes dans le revêtement contiennent une résine époxyde en tant qu'adhésif.

5. Procédé de fabrication d'une partie de filetage selon l'une quelconque des revendications 2 à 4, **caractérisé en ce que** les microcapsules contenant un adhésif et les microcapsules contenant un agent de durcissement sont mélangées avec un agent de revêtement non réactif, générant un effet de serrage, et fondues sur le filetage, l'agent de revêtement étant un polyamide.

6. Procédé de fabrication d'une partie de filetage selon l'une quelconque des revendications 2 à 4, **caractérisé en ce qu'**un agent de revêtement non réactif, générant un effet de serrage, est tout d'abord fondu sur le filetage, et les microcapsules contenant un adhésif et les microcapsules contenant un agent de durcissement sont pulvérisées sur l'agent de revêtement à l'état mou, encore non complètement refroidi, l'agent de revêtement étant un polyamide.

7. Procédé de fabrication d'une partie de filetage selon l'une quelconque des revendications 2 à 4, **caractérisé en ce qu'**un agent de revêtement non réactif, générant un effet de serrage, est tout d'abord fondu sur le filetage, puis un matériau support durcissable contenant des microcapsules est pulvérisé sur le filetage et durci, les microcapsules contenant en partie un adhésif et en partie un agent de durcissement, et l'agent de revêtement étant un polyamide.

8. Procédé de fabrication d'une partie de filetage selon l'une quelconque des revendications 2 à 4, **caractérisé en ce qu'**un agent de revêtement non réactif, générant un effet de serrage, est fondu sur le filetage et un matériau support durcissable est appliqué sur le filetage, puis les microcapsules contenant un adhésif et les microcapsules contenant un agent de durcissement sont introduites dans le matériau support encore humide et le matériau support est durci, l'agent de revêtement étant un polyamide.

9. Procédé selon la revendication 7 ou 8, **caractérisé en ce que** le matériau support est une laque UV.

10. Procédé selon la revendication 9, **caractérisé en ce que** la laque UV contient des polymères insaturés de l'acide (méth)acrylique ou de dérivés de l'acide (méth)acrylique, notamment d'esters de l'acide (méth)acrylique, ainsi que des photoinitiateurs.
